# FASCICULE DE BREVET EUROPEEN

(11) **EP 4 182 215 B1**
(45) Date de publication et mention de la délivrance du brevet: **04.09.2024**
(21) Numéro de dépôt: 21752577.3
(22) Date de dépôt: 15.07.2021
(51) Int. Cl.: B62M 6/45, B62M 6/50

(54) **SYSTÈME DE DÉTECTION SANS CAPTEUR D'UN EFFORT DE PÉDALAGE RÉEL**
SENSORLOSE ERKENNUNG ECHTER PEDALKRAFT
SENSORLESS DETECTION OF REAL PEDALLING EFFORT

(30) Priorité: 20.07.2020 FR 2007617
(43) Date de publication de la demande: 24.05.2023
(73) Titulaire: eBikeLabs, 38000 Grenoble (FR)
(72) Inventeur: BOSSON, Maël, 38120 Mont-Saint-Martin (FR); ALARY, Theophile, 38700 La Tronche (FR); MARGUET, Raphaël, 38710 Mens (FR); LETOUT, Sébastien, 38240 Meylan (FR)
(74) Mandataire: de Jong, Jean Jacques
(86) Numéro de dépôt international: PCT/FR2021/051319
(87) Numéro de publication internationale: WO 2022/018360

(56) Documents cités:
- EP-A1- 2 471 705
- WO-A1-2010/094515
- US-A- 6 152 250

## Description

### Domaine

L'invention est relative aux vélos à assistance électrique, et plus particulièrement à un système de commande de l'assistance en fonction de l'activité de pédalage de l'utilisateur.

### Arrière-plan

Une catégorie courante de vélos à assistance électrique est conçue pour enclencher l'assistance seulement lorsque l'utilisateur est en train de pédaler. Pour assurer un confort d'utilisation optimal, l'assistance est enclenchée progressivement, souvent proportionnellement à l'effort fourni. Cette caractéristique est assurée dans des vélos haut de gamme à l'aide d'un capteur du couple de pédalage. Dans des vélos plus économiques, dépourvus de capteur de couple, le moteur est souvent commandé en tout-ou-rien en fonction de l'activité de pédalage détectée par un capteur de rotation monté sur le pédalier. Le capteur de rotation est un dispositif simple comprenant, par exemple, un disque muni d'aimants monté sur l'axe du pédalier et un capteur magnétique fixé au cadre. Le disque comporte une multitude d'aimants régulièrement espacés, au nombre variant généralement entre 8 et 32, souvent 12.

Pour économiser sur le capteur de couple tout en offrant une assistance progressive, on a cherché à concevoir des systèmes basés sur une modélisation du comportement du vélo. Un tel exemple est décrit dans l'article « Pedaling torque sensor-less power assist control of an electric bike via model-based impédance control », D. S. Cheon et al., International Journal of Automotive Technology, Vol. 18, No. 2, pp. 327-333 (2017). De tels modèles sont complexes et doivent être paramétrés en fonction des caractéristiques de chaque vélo. Le document WO 2010/094515 montre par exemple , un procédé d'estimation d'activité de pédalage sur un vélo à assistance électrique, comprenant les étapes suivantes mesurer la vitesse de rotation d'une roue du vélo;mesurer la vitesse de rotation du pédalier;calculer un braquet apparent proportionnel au rapport de la vitesse de rotation mesurée de la roue et de la vitesse de rotation mesurée du pédalier; et analyser l'évolution du braquet apparent indépendamment d'un braquet théorique proportionnel au nombre de tours de roue par tour de pédalier, pour déduire des caractéristiques de l'activité de pédalage.

### Résumé

On prévoit selon l'invention un procédé d'estimation d'activité de pédalage sur un vélo à assistance électrique, comprenant des étapes consistant à mesurer la vitesse de rotation d'une roue du vélo ; mesurer la vitesse de rotation du pédalier ; calculer un braquet apparent proportionnel au rapport de la vitesse de rotation mesurée de la roue et de la vitesse de rotation mesurée du pédalier ; et analyser l'évolution du braquet apparent indépendamment d'un braquet théorique proportionnel au nombre de tours de roue par tour de pédalier, pour déduire des caractéristiques de l'activité de pédalage.

Le procédé selon l'invention comprend des étapes consistant à mesurer la vitesse de rotation du pédalier en utilisant un capteur produisant plusieurs échantillons pour chaque tour de pédalier, d'où il résulte qu'un nouvel échantillon du braquet apparent est produit pour chaque échantillon de mesure ; et effectuer l'analyse dans une base de temps où le pas entre les échantillons du braquet apparent est considéré comme constant.

Le procédé peut comprendre, selon une première approche, des étapes consistant à calculer une moyenne mobile courte du braquet apparent sur un nombre d'échantillons consécutifs correspondant à une fraction de tour du pédalier ; calculer une moyenne mobile longue du braquet apparent sur un nombre d'échantillons consécutifs correspondant à un nombre entier de tours du pédalier ; incrémenter d'un pas un score de pédalage inefficace à chaque fois qu'un échantillon du braquet apparent est à la fois en dehors d'une bande autour de la moyenne mobile courte et en dehors d'une bande autour de la moyenne mobile longue ; et déterminer que le pédalage est inefficace lorsque le score atteint un seuil.

Le procédé peut en outre comprendre une étape consistant à décrémenter d'un pas le score après un nombre consécutif d'échantillons à l'intérieur de la bande de la moyenne mobile longue.

Le procédé peut en outre comprendre des étapes consistant à calculer la dérivée de la moyenne mobile courte à chaque échantillon ; et si l'échantillon courant est dans la bande de la moyenne mobile courte et que la dérivée est inférieure à un seuil en valeur absolue, décrémenter le score de plusieurs pas.

Le procédé peut comprendre, selon une autre approche, des étapes consistant à produire un contenu fréquentiel d'une fenêtre glissante d'échantillons ; relever deux amplitudes du contenu fréquentiel, respectivement aux fréquences correspondant à un tour de pédalier et à un demi-tour de pédalier ; et produire un indicateur de l'effort de pédalage à partir des deux amplitudes.

L'indicateur d'effort peut être égal à la différence entre la plus grande des deux amplitudes et une valeur du contenu fréquentiel entre les deux amplitudes.

Le procédé peut comprendre, selon une autre approche, des étapes consistant à calculer une dérivée à chaque échantillon du braquet apparent ; lorsqu'une valeur de la dérivée est supérieure à un seuil : calculer une intégrale du braquet apparent par rapport à une moyenne du braquet apparent sur un nombre d'échantillons qui correspond à une fraction de tour de pédalier ; et déterminer que le pédalage est inefficace lorsque l'intégrale diverge.

Le procédé peut en outre comprendre une étape consistant à, après l'étape de détermination de pédalage inefficace, déterminer que le pédalage est efficace lorsque les valeurs des dérivées d'un nombre d'échantillons correspondant à une fraction de tour de pédalier sont toutes en-dessous du seuil.

### Description sommaire des dessins

Des modes de réalisation seront exposés dans la description suivante, faite à titre non limitatif en relation avec les figures jointes parmi lesquelles :
La figure 1 représente une courbe d'un exemple d'évolution d'un braquet théorique.
La figure 2 représente des courbes illustrant, dans le cadre de l'exemple de la figure 1, les évolutions d'un braquet apparent, d'un score d'inefficacité de pédalage, et d'une dérivée de l'évolution du braquet apparent.
La figure 3 représente des courbes illustrant, pour une partie agrandie de la courbe de braquet apparent de la figure 2, les évolutions du braquet apparent par rapport à une moyenne mobile rapide, du braquet apparent par rapport à une moyenne mobile lente, du score correspondant, et de la dérivée correspondante.
Les figures 4A et 4B représentent des transformées de Fourier du braquet apparent sur une fenêtre glissante dans deux situations différentes, permettant de calculer un indicateur d'effort de pédalage.

### Description détaillée

Dans la présente demande on propose un système capable, sur un vélo à assistance électrique dépourvu de capteur de couple, de détecter un vrai pédalage, voire d'estimer l'effort de pédalage, à l'aide de moyens particulièrement simples, ne nécessitant aucun paramétrage ni capteur autre que ceux déjà présents sur un vélo d'entrée de gamme. Par « vrai pédalage », on entend un pédalage efficace, fournissant un couple non-nul, qui lui-seul est censé déclencher l'assistance électrique - on souhaite par ce moyen éviter de déclencher l'assistance lorsque l'utilisateur pédale de façon inefficace, dans le vide.

Le système est basé sur un paramètre spécifique que l'on dénommera « braquet apparent » Ba. Le braquet (théorique) Bth est souvent défini comme le nombre de tours de roue motrice faits pour un tour de pédalier - il est constant pour un rapport de vitesses donné.

Le braquet apparent peut être défini comme le rapport Vm/Vp entre la vitesse de rotation instantanée de la roue motrice et la vitesse de rotation instantanée du pédalier, chacune de ces vitesses étant mesurable par des capteurs présents sur un vélo d'entrée de gamme.

Pour simplifier davantage les traitements, les mesures de vitesse peuvent être les valeurs utilisées par ailleurs dans le système de gestion du moteur. Par exemple, la vitesse Vm peut en fait être la vitesse linéaire du vélo, exprimée en mètres par heure, et la vitesse Vp peut être la vitesse de rotation du pédalier exprimée en tours par minute, ce qui produit un braquet apparent exprimé en soixantièmes de mètre par tour de pédalier. Ce choix d'unité inhabituel fournit des nombres relativement grands que l'on peut traiter comme des entiers sans perte de précision.

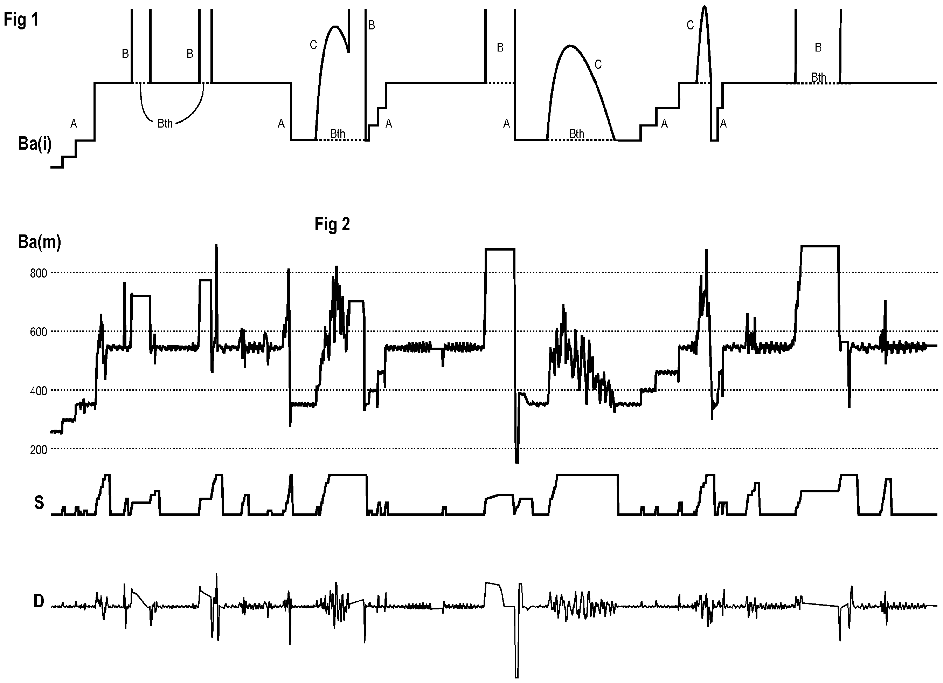

La figure 1 représente une courbe d'évolution du braquet apparent selon un exemple d'activité de pédalage, en supposant que tous les composants de la transmission du vélo et les capteurs sont idéaux.

Partout où le pédalier est en prise avec la roue motrice, à savoir quand le cycliste exerce un effort non-nul sur les pédales, le braquet apparent (idéal) Ba(i) suit le braquet théorique Bth. Ce braquet théorique comporte des paliers horizontaux correspondant à différents rapports de vitesses. Lors de phases de changements de rapports indiquées par A, le braquet évolue en marche d'escalier.

Dans des phases indiquées par B, le cycliste cesse de pédaler. Le braquet apparent devient infini.

Dans des phases indiquées par C, le pédalage ralentit par rapport à la vitesse de la roue motrice, sans toutefois s'arrêter. Le braquet apparent s'écarte du braquet théorique vers le haut, d'autant plus que le pédalage ralentit.

En observant cette courbe idéale, on pourrait déduire qu'il est facile, en connaissant le braquet théorique, de détecter les phases B et C pour conclure à un pédalage inefficace. Toutefois, le braquet théorique est inconnu, car il faudrait pour cela le paramétrer individuellement pour chaque vélo en fonction de son équipement et détecter les changements de rapports, ce qu'on souhaite éviter. Sans connaissance préalable, il est difficile de savoir si les phases A, B et C correspondent à une variation de pédalage imposé par un changement de rapport ou à une variation volontaire du cycliste dans la marge laissée par la roue libre.

La figure 2 représente des courbes illustrant les évolutions d'un braquet apparent mesuré Ba(m), d'un score d'inefficacité de pédalage S, et d'une dérivée D de l'évolution du braquet apparent, basées sur des relevés effectués dans des conditions réelles ayant sensiblement les mêmes phases A, B et C que l'exemple de la figure 1. L'échelle des ordonnées du braquet apparent correspond à l'unité précédemment évoquée, à savoir des soixantièmes de mètre par tour de pédalier.

Le capteur de vitesse du pédalier comporte ici 12 aimants répartis sur un disque fixé à l'axe du pédalier, et produit ainsi douze impulsions par tour de pédalier. La vitesse est déterminée à partir de l'écart temporel entre deux impulsions, d'où il résulte qu'on obtient douze échantillons de vitesse par tour de pédalier.

La vitesse de la roue motrice varie lentement en pratique, de sorte que le capteur de vitesse de la roue est généralement conçu pour produire peu d'échantillons par tour, par exemple un seul. Lorsque le moteur est sur le moyeu, c'est le capteur de vitesse du moteur qui peut fournir la vitesse de rotation de la roue - dans ce cas la mesure de vitesse a généralement une meilleure résolution temporelle.

La courbe Ba(m) comporte un point calculé pour chaque échantillon du capteur de vitesse du pédalier. L'axe horizontal représentant ici le temps, le pas entre les points de la courbe Ba(m) varie inversement proportionnellement à la vitesse du pédalier. En réalité, les calculs exposés ci-après tiennent compte seulement des valeurs des échantillons sans faire intervenir le temps variable qui sépare deux échantillons, ce qui permet de simplifier les calculs et même produire des effets utiles. En d'autres termes, dans les calculs, le pas entre les échantillons est considéré comme étant constant et égal à 1, ce qui revient à utiliser comme base de temps la fréquence variable de pédalage et non la fréquence fixe d'une horloge.

On constate que les plateaux de la courbe Ba(m) comportent du bruit de faible amplitude dû aux imperfections des capteurs et de la transmission, comme le rattrapage de jeux et des effets d'élasticité des matériaux impliqués.

Les phases B d'arrêt de pédalage sont caractérisées par des créneaux d'amplitude variable. En fait, comme le capteur de vitesse du pédalier ne fournit pas une mesure continue, il n'est pas capable de mesurer une vitesse tendant vers zéro. On applique alors une exception dans le mode de calcul, qui produit les créneaux représentés au lieu de pics tendant vers l'infini, qui seraient en fait inutilement perturbateurs pour les calculs subséquents.

Ainsi, on considère qu'un arrêt de pédalage survient lorsqu'aucun nouvel échantillon n'est produit dans un intervalle d'attente, par exemple 500 ms. L'intervalle d'attente peut varier inversement proportionnellement à la dernière vitesse de pédalage relevée. Au redémarrage du pédalage, on attend le deuxième échantillon pour démarrer les nouvelles valeurs de vitesse de pédalage, ce qui produit des valeurs de braquet limitées au lieu de tendant vers l'infini.

Les phases C de pédalage ralenti oscillent au bon vouloir du cycliste en plus de présenter le bruit dû à la transmission.

On constate également des valeurs de la courbe en-dessous du braquet théorique, représentatives normalement d'un pédalage plus rapide que celui imposé par le rapport de vitesses. Ces valeurs peuvent être expliquées par la course à vide à effectuer pour enclencher les cliquets de la roue libre lors d'une reprise de pédalage après un arrêt ou un changement de rapport.

Les courbes du score S et de la dérivée D sont illustrées à titre indicatif dans la figure 2 et seront décrites plus en détail sur une portion de courbe ci-après.

Pour tirer des informations utiles de la courbe de braquet apparent bruitée Ba(m), on propose ci-après plusieurs approches différentes, toutes indépendantes de la connaissance du braquet théorique Bth et utilisant de préférence la fréquence de pédalage comme base de temps.

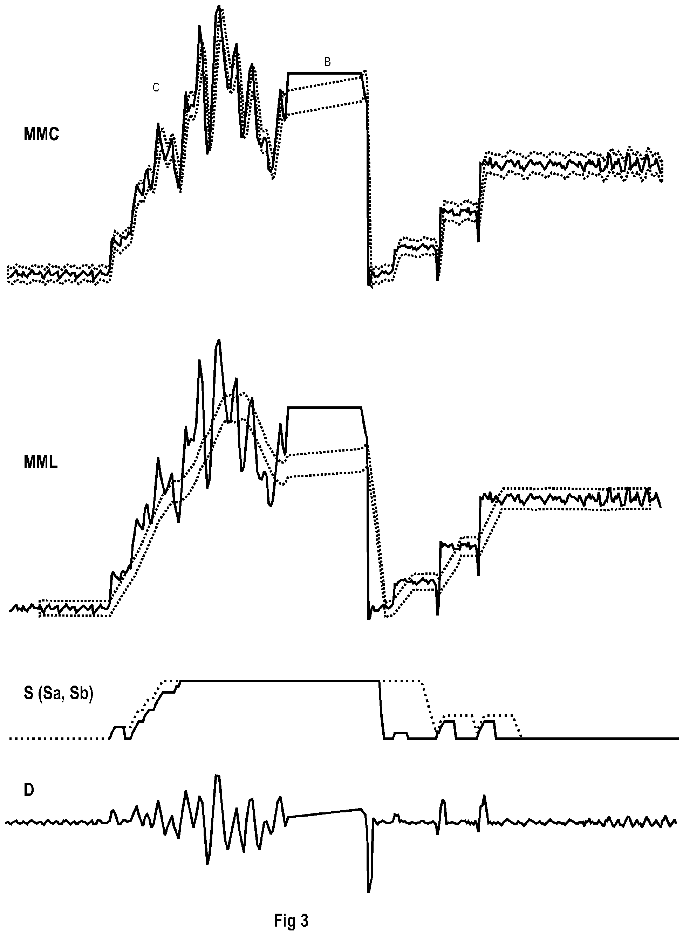

La figure 3 illustre ainsi une première approche, qui utilise une moyenne mobile courte MMC et une moyenne mobile longue MML pour calculer un score d'inefficacité de pédalage S, ou score « de triche ».

Plus spécifiquement, la moyenne mobile courte MMC est une moyenne calculée sur les derniers échantillons couvrant une fraction de tour du pédalier, par exemple ici un quart de tour, ou 3 échantillons pour un capteur à 12 aimants. La moyenne mobile longue MML est quant à elle calculée sur les derniers échantillons couvrant un nombre entier de tours du pédalier, par exemple un tour, ou 12 échantillons pour un capteur de 12 aimants.

A la figure 3, les courbes MMC et MML illustrent une même portion de la courbe de braquet apparent Ba(m) de la figure 2 par rapport, respectivement, à une bande définie autour de la moyenne mobile courte MMC et une bande définie autour de la moyenne mobile longue MML. Les bandes sont illustrées en pointillés tandis que la portion de courbe Ba(m) est illustrée en trait plein. La portion de courbe illustrée inclut des zones C et B de pédalage dans le vide et à l'arrêt.

Selon cette approche, on cherche à trouver les portions de la courbe dont l'évolution s'éloigne de façon durable d'un plateau, quelle que soit la valeur du plateau. Pour cela, le score S est incrémenté d'un pas à chaque fois que l'échantillon courant du braquet apparent Ba(m) est en dehors, à la fois, de la bande de la moyenne mobile longue et de la bande de la moyenne mobile courte MMC.

Dans l'exemple considéré, le pas de l'incrément est de 10 % pour un score allant jusqu'à 100 %, et la demi-largeur des bandes est égale à MM/40 + 5, où MM est la valeur courante de la moyenne mobile considérée, exprimée en soixantièmes de mètre par tour de pédalier.

On aperçoit ainsi une phase d'incrémentations consécutives du score S jusqu'à saturation à la valeur 100 % pendant une phase C qui correspond effectivement à un pédalage inefficace.

La figure 3 illustre en fait deux scores Sa et Sb, calculés selon deux variantes de décrémentation.

Selon la première variante de décrémentation (score Sa en pointillés), le score Sa est décrémenté d'un pas (par exemple 10 %) pour chaque succession d'un nombre donné N d'échantillons consécutifs à l'intérieur de la bande de la moyenne mobile longue (indépendamment de la position par rapport à la bande de la moyenne mobile courte). On constate que ce score a tendance à redescendre lentement, bien après qu'un pédalage efficace a repris. Le nombre d'échantillons N est par exemple égal au nombre d'aimants du capteur de vitesse du pédalier, ici 12.

Selon la deuxième variante (score Sb en trait plein), on superpose un mode de décrémentation accéléré. Selon ce mode, le score est décrémenté d'un grand pas, par exemple 50%, lorsque l'échantillon courant est hors de la bande de la moyenne mobile longue et que la valeur absolue de la dérivée courante D est en dessous d'un seuil T, par exemple égal à 10, indépendamment de la position par rapport à la bande de la moyenne mobile courte. En effet, on constate que la dérivée D oscille avec une forte amplitude pendant les phases de pédalage dans le vide C et varie peu pendant les phases de pédalage efficace, en dehors des changements de rapports. La dérivée est calculée, par exemple, comme la différence des valeurs des échantillons courant et précédent de la moyenne mobile courte, et est donc aussi exprimée en soixantièmes de mètre par tour.

On notera en passant que la phase B d'absence de pédalage est trompeuse dans cette représentation selon l'axe du temps. En effet, on pourrait croire que le pédalage a une fréquence non-nulle stable pendant une longue durée. Mais cette longue phase apparemment stable est due à l'absence d'échantillons.

En prenant comme base de temps la fréquence de pédalage et non le temps, la durée de la phase B n'intervient pas dans les calculs, ce que l'on peut remarquer sur l'évolution lente des moyennes mobiles, qui dépendent seulement des échantillons aux extrémités du plateau de la phase B. En représentant les courbes dans une telle base de temps, le plateau de la phase B se réduit à un point, d'où on pourra constater que la dérivée D oscille avec une forte amplitude sur l'ensemble des phases C et B.

Ainsi, ce procédé produit un score S (Sa, Sb) qui évolue vers un maximum pendant les phases de pédalage inefficace. Ce score peut conditionner le démarrage et l'arrêt de l'assistance électrique du vélo, comme arrêter l'assistance lorsque le score dépasse un seuil (par exemple entre 30 et 70 %), et redémarrer l'assistance lorsque le score passe en-dessous du même seuil ou un autre seuil. On peut également prévoir des niveaux d'assistance différents en fonction de la valeur du score pour commander l'assistance de manière plus progressive.

Une deuxième approche pour exploiter la courbe de braquet apparent mesuré Ba(m) est basée sur le constat que les oscillations ayant lieu pendant les plateaux contiennent des informations utiles. Il s'avère, lorsque le pédalage est en prise avec la roue motrice, qu'une composante quasi-périodique des oscillations est due à la déformation élastique de la transmission, notamment de la chaîne, provoquée par le couple appliqué au pédalier. Ce couple varie au cours d'un tour de pédalier, avec un maximum situé généralement autour de la position horizontale des manivelles du pédalier.

On propose ainsi d'effectuer une analyse dans le domaine des fréquences, en appliquant par exemple une transformée de Fourier rapide (FFT) à une fenêtre glissante du braquet apparent Ba. Compte tenu que la fréquence de pédalage en prise varie en fonction de la vitesse du vélo et du rapport de vitesses, une transformée de Fourier typique fournirait des pics à des fréquences variables, ce qui serait difficile à exploiter. Par contre, cette difficulté est effacée lorsqu'on utilise la fréquence de pédalage comme base de temps. Alors, des pics apparaissent à des « fréquences » correspondant à des fractions de tour de pédalier, en supposant que des maxima d'effort ont tendance à être appliqués toujours aux mêmes positions de rotation du pédalier.

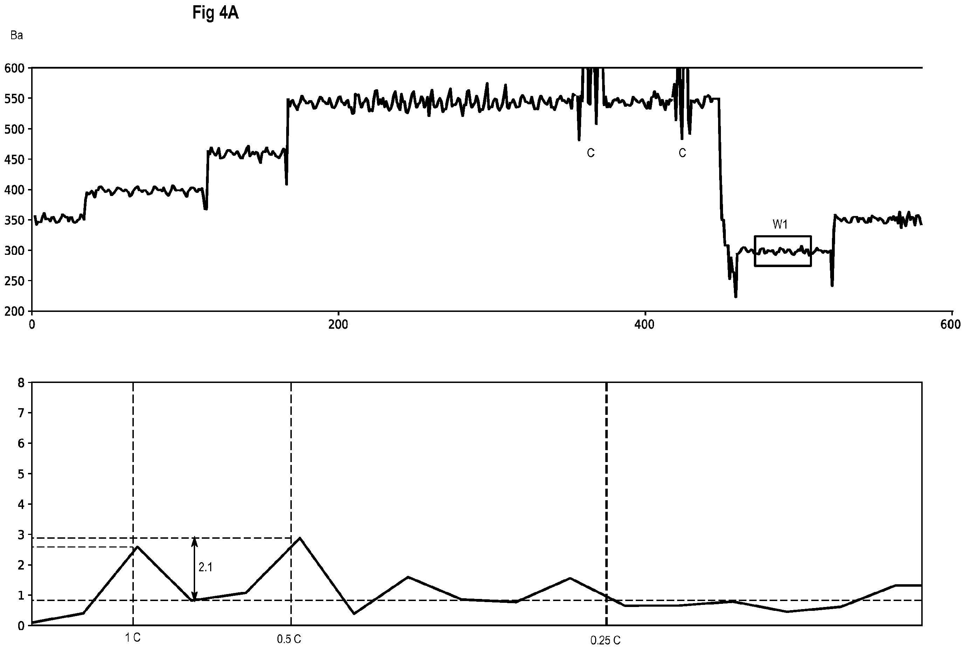

La figure 4A illustre une transformée de Fourier rapide sur une fenêtre W1 de 36 échantillons consécutifs dans un plateau de la courbe de braquet apparent Ba (courbe du haut), correspondant à un faible effort de pédalage. Les oscillations sont de faible amplitude.

La transformée de Fourier rapide (courbe du bas) exhibe deux pics d'amplitude comparable, l'un à un tour de pédalier, et l'autre à un demi-tour de pédalier. Un indicateur d'effort de pédalage, ici égal à 2,1, peut être fourni par la différence entre l'amplitude du plus grand des deux pics et la valeur minimale entre les deux pics. D'autres calculs sont envisageables, comme la somme des amplitudes des deux pics par rapport à la valeur minimale entre les deux pics. Cet indicateur d'effort peut être utilisé par le système de commande du moteur comme une mesure du couple afin d'opérer une assistance progressive.

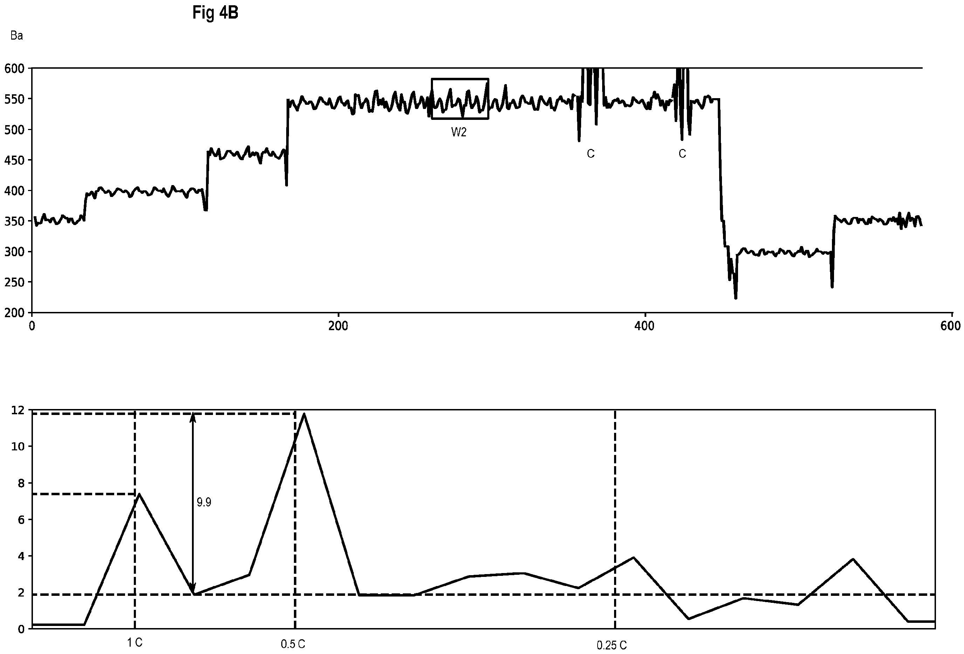

La figure 4B illustre une transformée de Fourier sur une fenêtre W2 couvrant un plateau de la courbe de braquet apparent Ba correspondant à un effort de pédalage plus important. Les oscillations sont de plus forte amplitude.

La transformée de Fourier rapide exhibe à nouveau deux pics, à un tour et à un demi-tour, mais d'amplitude plus importante que dans la figure 4A, résultant en un indicateur d'effort plus important, ici 9,9.

Lors d'un pédalage dans le vide, les oscillations périodiques dues à la déformation élastique de la transmission sont quasi nulles, et ne subsistent que des oscillations dues à des variations de vitesse de pédalage imposées par le cycliste. Un exemple de pédalage dans le vide apparaît dans les zones C de la courbe de braquet apparent Ba. Ces oscillations, même si elles peuvent être d'amplitude importante, ne sont pas périodiques et peuvent être vues comme du bruit aléatoire. En principe, une transformée de Fourier d'un bruit aléatoire produit un spectre plat dont le niveau représente l'amplitude moyenne du bruit. En pratique, la transformée de Fourier rapide, calculée sur un relativement faible nombre de points, comporte des pics d'amplitude significative répartis sur tout le spectre couvert. Ainsi, la présence de pics d'amplitude significative au-delà de la « fréquence » un quart-de-tour de pédalier est indicative d'un effort de pédalage nul.

Un changement de rapport de vitesses provoque une discontinuité que la transformée de Fourier traduirait par des parasites. Pour éviter cela, on peut soustraire aux échantillons l'échelon subi au changement de rapport, ce qui aligne en moyenne les nouveaux échantillons avec les échantillons précédant le changement de rapport.

Selon une variante, si on n'observe que deux ou trois « fréquences » pour calculer l'indicateur d'effort, à savoir un tour, un demi-tour, et éventuellement trois-quarts de tour (pour relever le creux entre les deux pics attendus), on peut, à la place d'une transformée de Fourier, utiliser deux ou trois filtres passe-bande centrés sur les « fréquences » à observer. L'indice d'effort est alors calculé à partir des valeurs produites par les filtres.

Une troisième approche pour détecter un pédalage dans le vide est basée sur la dérivée de la courbe de braquet apparent et n'utilise pas de moyennes mobiles ni d'analyse dans le domaine des fréquences. Comme on l'a précédemment relevé, lors d'un pédalage en prise sur la roue libre, la dérivée varie peu, alors qu'elle se met à osciller avec une amplitude significative lors d'un pédalage dans le vide.

Selon cette approche, lorsque la valeur absolue de la dérivée courante D est en dessous d'un seuil T, par exemple égal à 10 pour un capteur 12 aimants, on considère que le cycliste pédale en prise. De préférence, la dérivée est calculée en tout point de la courbe de braquet apparent, par exemple comme la différence des valeurs de l'échantillon courant et de l'échantillon précédent.

Si une valeur de la dérivée D est supérieure au seuil fixé T, on calcule l'intégrale de la courbe de braquet par rapport à la moyenne m du braquet sur un nombre d'échantillons qui correspond à une fraction, par exemple 1/3, du nombre d'aimants. La moyenne m peut être initialisée à chaque changement de rapport, et être mise à jour de manière récursive à chaque nouvel échantillon. L'intégrale peut être le cumul des différences entre les valeurs des échantillons et la moyenne m.

Si cette intégrale diverge, on considère que le cycliste effectue du pédalage dans le vide. Si, à l'inverse, l'intégrale est stable ou converge, on considère que le pédalage est toujours en prise.

On peut considérer que l'intégrale diverge lorsqu'elle dépasse un seuil, par exemple de 80. Tant que l'intégrale reste sous le seuil, on considère qu'elle est stable. En pratique, comme le pédalage dans le vide se traduit par des variations du braquet apparent au-dessus de la valeur moyenne, on ne considère qu'un seuil positif.

Dans le cas où l'intégrale diverge, on considère que le cycliste pédale dans le vide jusqu'à ce que les dérivées se retrouvent à nouveau en dessous de la valeur seuil T pendant un nombre suffisant d'échantillons consécutifs, correspondant à une fraction du nombre d'aimants, par exemple 3 échantillons pour un pédalier à 12 aimants.

De nombreuses variantes et modifications des modes de réalisation décrits ici apparaîtront à l'homme du métier. Des valeurs de paramètres entrant dans les calculs ont été fournies à titre indicatif (coefficients intervenant dans les moyennes mobiles, seuils, nombre d'échantillons dans les fenêtres, nombre d'aimants des capteurs de vitesse, pas des incréments, etc.). Il est évident que ces valeurs peuvent varier dans une certaine marge tout en fournissant des résultats satisfaisants, et peuvent être adaptées aux à différentes applications envisagées. Par « moyenne mobile » on entend de façon générique tout type de moyenne glissante, comme une moyenne pondérée dont les coefficients de pondération peuvent être choisis pour accorder plus ou moins d'importance aux échantillons les plus récents.

## Revendications

1. Procédé d'estimation d'activité de pédalage sur un vélo à assistance électrique, comprenant les étapes suivantes :
mesurer la vitesse de rotation d'une roue du vélo ;
mesurer la vitesse de rotation du pédalier en utilisant un capteur produisant plusieurs échantillons pour chaque tour de pédalier, d'où il résulte qu'un nouvel échantillon du braquet apparent est produit pour chaque échantillon de mesure ;
calculer un braquet apparent (Ba) proportionnel au rapport de la vitesse de rotation mesurée de la roue et de la vitesse de rotation mesurée du pédalier ; et
analyser, dans une base de temps où le pas entre les échantillons du braquet apparent est considéré comme constant, l'évolution du braquet apparent indépendamment d'un braquet théorique (Bth) proportionnel au nombre de tours de roue par tour de pédalier, pour déduire des caractéristiques de l'activité de pédalage.

2. Procédé selon la revendication 1, comprenant en outre les étapes suivantes :
calculer une moyenne mobile courte du braquet apparent sur un nombre d'échantillons consécutifs correspondant à une fraction de tour du pédalier ;
calculer une moyenne mobile longue du braquet apparent sur un nombre d'échantillons consécutifs correspondant à un nombre entier de tours du pédalier ;
incrémenter d'un pas un score de pédalage inefficace à chaque fois qu'un échantillon du braquet apparent est à la fois en dehors d'une bande autour de la moyenne mobile courte et en dehors d'une bande autour de la moyenne mobile longue ; et
déterminer que le pédalage est inefficace lorsque le score atteint un seuil.

3. Procédé selon la revendication 2, comprenant en outre l'étape suivante :
décrémenter d'un pas le score après un nombre consécutif d'échantillons à l'intérieur de la bande de la moyenne mobile longue.

4. Procédé selon la revendication 2, comprenant en outre les étapes suivantes :
calculer la dérivée de la moyenne mobile courte à chaque échantillon ; et
si l'échantillon courant est dans la bande de la moyenne mobile courte et que la dérivée est inférieure à un seuil en valeur absolue, décrémenter le score de plusieurs pas.

5. Procédé selon la revendication 1, comprenant en outre les étapes suivantes :
produire un contenu fréquentiel d'une fenêtre glissante d'échantillons ;
relever deux amplitudes du contenu fréquentiel, respectivement aux fréquences correspondant à un tour de pédalier et à un demi-tour de pédalier ; et
produire un indicateur de l'effort de pédalage à partir des deux amplitudes.

6. Procédé selon la revendication 5, dans lequel l'indicateur d'effort est égal à la différence entre la plus grande des deux amplitudes et une valeur du contenu fréquentiel entre les deux amplitudes.

7. Procédé selon la revendication 1, comprenant en outre les étapes suivantes :
calculer une dérivée (D) à chaque échantillon du braquet apparent ;
lorsqu'une valeur de la dérivée est supérieure à un seuil (T) :
calculer une intégrale du braquet apparent par rapport à une moyenne du braquet apparent sur un nombre d'échantillons qui correspond à une fraction de tour de pédalier ; et
déterminer que le pédalage est inefficace lorsque l'intégrale diverge.

8. Procédé selon la revendication 7, comprenant en outre l'étape suivante :
après l'étape de détermination de pédalage inefficace, déterminer que le pédalage est efficace lorsque les valeurs des dérivées d'un nombre d'échantillons correspondant à une fraction de tour de pédalier sont toutes en-dessous du seuil.

## Patentansprüche

1. Verfahren zum Schätzen einer Tretaktivität an einem elektrisch unterstützten Fahrrad, umfassend die folgenden Schritte:
Messen der Drehzahl eines Rades des Fahrrads;
Messen der Drehzahl des Tretlagers unter Verwendung eines Sensors, der für jede Umdrehung des Tretlagers mehrere Abtastwerte erzeugt, wobei für jeden Messabtastwert ein neuer Abtastwert des scheinbaren Übersetzungsverhältnisses erzeugt wird;
Berechnen eines scheinbaren Übersetzungsverhältnisses (Ba), das proportional zu dem Verhältnis der gemessenen Drehzahl des Rades und der gemessenen Drehzahl des Tretlagers ist; und
Analysieren, in einer Zeitbasis, in der der Schritt zwischen den Abtastwerten des scheinbaren Übersetzungsverhältnisses als konstant angesehen wird, der Entwicklung des scheinbaren Übersetzungsverhältnisses unabhängig von einem theoretischen Übersetzungsverhältnis (Bth), das proportional zu der Anzahl der Radumdrehungen pro Tretlagerumdrehung ist, zum Ableiten von Merkmalen der Tretaktivität davon.

2. Verfahren nach Anspruch 1, umfassend ferner die folgenden Schritte:
Berechnen eines kurzen gleitenden Mittels des scheinbaren Übersetzungsverhältnisses über eine Anzahl aufeinanderfolgender Abtastwerte, die einem Anteil einer Umdrehung des Tretlagers entsprechen;
Berechnen eines langen gleitenden Mittels des scheinbaren Übersetzungsverhältnisses über eine Anzahl aufeinanderfolgender Abtastwerte, die einer ganzzahligen Anzahl von Umdrehungen des Tretlagers entsprechen;
Erhöhen einer Bewertung für ineffektives Treten um einen Schritt jedes Mal, wenn ein Abtastwert des scheinbaren Übersetzungsverhältnisses zugleich außerhalb eines Bands um das kurze gleitende Mittel als auch außerhalb eines Bands um das lange gleitende Mittel liegt; und
Bestimmen, dass das Treten ineffektiv ist, wenn die Bewertung einen Schwellenwert erreicht.

3. Verfahren nach Anspruch 2, umfassend ferner den folgenden Schritt:
Dekrementieren der Bewertung nach einer aufeinanderfolgenden Anzahl von Abtastwerten innerhalb des Bandes des langen gleitenden Mittels um einen Schritt.

4. Verfahren nach Anspruch 2, umfassend ferner die folgenden Schritte:
Berechnen der Ableitung des kurzen gleitenden Mittels bei jedem Abtastwert; und
falls sich der aktuelle Abtastwert in dem Band des kurzen gleitenden Mittels befindet und die Ableitung im absoluten Wert unter einem Schwellenwert liegt, Dekrementieren der Bewertung um mehrere Schritte.

5. Verfahren nach Anspruch 1, umfassend ferner die folgenden Schritte:
Erzeugen eines Frequenzinhalts eines gleitenden Fensters von Abtastwerten;
Anheben von zwei Amplituden des Frequenzinhalts, jeweils bei den Frequenzen, die einer Tretlagerumdrehung und einer halben Tretlagerumdrehung entsprechen; und
Erzeugen eines Indikators der Tretkraft aus den zwei Amplituden.

6. Verfahren nach Anspruch 5, wobei der Kraftindikator gleich der Differenz zwischen der größeren der zwei Amplituden und einem Wert des Frequenzinhalts zwischen den zwei Amplituden ist.

7. Verfahren nach Anspruch 1, umfassend ferner die folgenden Schritte:
Berechnen einer Ableitung (D) für jeden Abtastwert des scheinbaren Übersetzungsverhältnisses;
wenn ein Wert der Ableitung größer als ein Schwellenwert (T) ist:
Berechnen eines Integrals des scheinbaren Übersetzungsverhältnisses relativ zu einem Mittel des scheinbaren Übersetzungsverhältnisses über eine Anzahl von Abtastwerten, die einem Anteil der Tretlagerumdrehung entspricht; und
Bestimmen, dass das Treten ineffektiv ist, wenn das Integral divergiert.

8. Verfahren nach Anspruch 7, umfassend ferner den folgenden Schritt:
nach dem Schritt des Bestimmens des ineffektiven Tretens, Bestimmen, dass das Treten effektiv ist, wenn die Werte der Ableitungen einer Anzahl von Abtastwerten, die einem Anteil der Tretlagerumdrehung entsprechen, alle unter dem Schwellenwert liegen.

## Claims

1. A method for estimating pedalling activity on an electrically assisted bicycle, comprising the following steps:
measuring the rotational speed of a bicycle wheel;
measuring the rotational speed of a crankset using a sensor that produces several samples for each revolution of the crankset, whereby a new sample of an apparent gear ratio is produced for each measurement sample;
calculating an apparent gear ratio (Ba) proportional to the ratio of the measured rotational speed of the wheel to the measured rotational speed of the crankset; and
analysing, in a time base where the pitch between the samples of the apparent gear ratio is considered to be constant, the evolution of the apparent gear ratio independently of a theoretical gear ratio (Bth) proportional to the number of wheel revolutions per crankset revolution, in order to deduce characteristics of pedalling activity.

2. The method according to claim 1, further comprising the following steps:
calculating a short moving average of the apparent gear ratio over a number of consecutive samples corresponding to a fraction of a crankset revolution;
calculating a long moving average of the apparent gear ratio over a number of consecutive samples corresponding to an integer number of crankset revolutions;
incrementing an inefficient pedalling score by one step each time a sample of the apparent gear ratio is both outside a band around the short moving average and outside a band around the long moving average; and
determining that pedalling is inefficient when the score reaches a threshold.

3. The method according to claim 2, further comprising the following step:
decrementing the score by one step after a consecutive number of samples within the long moving average band.

4. The method according to claim 2, further comprising the following steps:
calculating a derivative of the short moving average for each sample; and
if the current sample is in the short moving average band and the derivative is below an absolute value threshold, decrementing the score by multiple steps.

5. The method according to claim 1, further comprising the following steps:
producing a frequency content of a sliding window of samples;
recording two amplitudes of the frequency content, at frequencies corresponding to one pedal revolution and half a pedal revolution respectively; and
producing a pedalling effort indicator from the two amplitudes.

6. The method according to claim 5, wherein the effort indicator is equal to the difference between the greater of the two amplitudes and a value of the frequency content between the two amplitudes.

7. The method according to claim 1, further comprising the following steps:
calculating a derivative (D) at each sample of the apparent gear ratio;
when a value of the derivative is greater than a threshold (T):
calculating an integral of the apparent gear ratio with respect to an average of the apparent gear ratio over a number of samples corresponding to a fraction of a pedal revolution; and
determining that pedalling is inefficient when the integral diverges.

8. The method according to claim 7, further comprising the following step:
after the step of determining an inefficient pedalling, determining that pedalling is efficient when the values of the derivatives of a number of samples corresponding to a fraction of a pedal revolution are all below the threshold.
